# EUROPEAN PATENT SPECIFICATION

(11) **EP 2 728 844 B1**
(45) Date of publication and mention of the grant of the patent: **08.03.2017**
(21) Application number: 13191633.0
(22) Date of filing: 05.11.2013
(51) Int. Cl.: H04M 3/51, G06Q 10/00

(54) **TELECOMMUNICATION SYSTEM AND METHOD FOR CALL CENTER OUTDIALLING CAMPAIGN**
TELEKOMMUNIKATIONSSYSTEM UND -VERFAHREN FÜR EINE CALL CENTER OUTDIALLING KAMPAGNE
SYSTÈME ET PROCÉDÉ DE TÉLÉCOMMUNICATION POUR UNE CAMPAGNE CENTRE D'APPEL DE OUTDIALLING

(30) Priority: 05.11.2012 US 201213669127
(43) Date of publication of application: 07.05.2014
(73) Proprietor: SAP SE, 69190 Walldorf (DE)
(72) Inventor: Salkala, Ville, 69190 Walldorf (DE)
(74) Representative: Richardt Patentanwälte PartG mbB

(56) References cited:
- WO-A1-2007/137575
- US-A1- 2010 303 225

## Description

### Field of the invention

This patent document pertains generally to networked communications.

### Background and related art

The provisioning of teleservices is a growing industry. Teleservices are services provided by service providers to recipients via a telephone. The services are provided by a telecommunication system that may establish a contact between the recipient and the service provider using telephone lines. In some instances, the calls are initiated by the entity providing the service, and in other instances, the calls are initiated by the person (recipient) receiving the service.

Some service providers are not directly integrated with the telecommunication system and may not have access to sophisticated data networks that can provide a required quality of service or meet security requirements. These service providers typically require a dedicated telephone or voice connection and a personal computer to manage any communications between the service provider and the recipient. The maintenance and information technology (IT) support required to maintain such equipment over a large geographical area is expensive and time-consuming.

WO 2007/137575 A1 discloses a dynamic call connection distributor (DCD) comprising an agent pool, comprising information of call agents, the agent pool being maintained dynamically by the call agents.

US 2010/303225 A1 discloses a system for making outbound calls including a first node connected to a network for placing outbound telephone calls.

### Summary

The objective of the invention is to provide for an improved telecommunication system, an improved telecommunication method and an improved computer program product.

The invention is described by the independent claims. Embodiments are described by the dependent claims.

Embodiments of the invention provide for a telecommunication system, comprising:
- a session management module configured to establish a telephone communication session with a service provider via a telephone of the service provider;
- a campaign management module configured to assign the service provider to a campaign that defines tasks to be performed by the service provider during at least a portion of the session, wherein the tasks comprise a set of sequential voice calls to be placed by the telecommunication system to a plurality of recipients via respective telephones of the recipients for establishing respective telephone communications between the service provider and the recipient, wherein each of said calls is established between the recipients and the service provider during said portion of the session,
wherein the telecommunication system is adapted for maintaining the established session of the service provider between each of the sequential calls.

Embodiments may have the advantage that the computing resources required at the telecommunication system are minimized. By establishing a continuous communication session between the session management module and the telephone of the service provider while performing the set of sequential voice calls to be placed by the telecommunication system to the plurality of recipients, no redialing from the telecommunication system to the telephone of the service provider is required. Each redialing from the telecommunication system to the telephone of the service provider requires extensive signaling procedures between the telecommunication system and the telephone which thus puts a high load onto the telecommunication system. In case of a multitude of service providers that may be connectable to the telecommunication system, this would significantly consume computing resources of the system. By configuring the session management module to maintain the session in between individual telephone communications between the service provider and the recipients, the computing resources required at the telecommunication system are minimized.

In accordance with an embodiment of the invention, the system further comprises a hub management module configured to manage a call of the plurality of sequential calls between the service provider and the recipient of the plurality of recipients, wherein the telecommunication system further comprises an interactive voice response, IVR, module wherein the IVR module is configured for
- receiving in the session a voice command start signal from the service provider via the telephone of the service provider,
- after receiving the start signal, interpreting a subsequent voice message of the service provider received via the telephone of the service provider as a voice command for controlling the telecommunication system,
wherein the telecommunication system is further adapted for executing the voice command, wherein the hub management module is configured for blanking the voice command start signal and the voice message in the call between the service provider and the recipient.

This may have the advantage that the telecommunication system may be controlled by the service provider without need of any computer system on the side of the service provider. For example, the voice command may command the telecommunication system to verbally announce details of the recipient to which currently the voice call is established with the service provider. In a further example, the voice command may command the telecommunication system to drop the call and to immediately place a subsequent call to a next recipient of the plurality of recipients.

However, by blanking the voice command start signal and the voice message in the call between the service provider and the recipient the communication between the service provider and the recipient is not disturbed by said start signal and voice message. Nevertheless, a computer on side of the service provider is not required in order to control or command the telecommunication system. This further minimizes to total amount of resources required to perform a telecommunication between the service provider and the recipient.

In accordance with an embodiment of the invention, the voice command start signal is indicated by one or more touch tone signals, for example DTMF tone signals (Dual-tone multi-frequency signals). The hub management module may be configured for generally blanking the DTMF tone generated by pressing the hash key "#" on the telephone and subsequently to interpret any verbally spoken words as commands. A text to speech interface may be used to translate the spoken words into commands.

In accordance with an embodiment of the invention, the telecommunication system further comprises a service provider management module configured to manage, using one or more processors, a work state of the service provider within the plurality of sequential calls between the service provider and the plurality of recipients, wherein
- in case the work state of the service provider is "ready", the service provider management module is further configured to connect the service provider to a recipient of the plurality of recipients using a call placed to said recipient,
- in case the work state of the service provider is "not ready", the service provider management module is further configured to delay connecting the service provider to a recipient of the plurality of recipients using a call placed to said recipient until the work state of the service provider is "ready" or to assign the task of placing the call to the recipient to a further service provider assigned to the campaign.

This may have the advantage that the amount of resources required at the telecommunication system is further reduced. Placing a call to a recipient is also a resource consuming process. Thus, unsuccessfully trying to establish a call between the service provider and the recipient after successfully having placed a call to the recipient would require disconnecting the recipient from the call and again placing the same call at a later time point. Thus, the same call would have to be placed twice which doubles the amount of resources required to contact the recipient. By using the service provider management module in the way described above, it is ensured that potentially unsuccessful attempts to connect a service provider to a recipient are avoided in advance.

In a further embodiment, the telecommunication system further comprises receiving a pause command for changing the work state of the service provider from "ready" to "not ready", wherein the pause command indicates a time duration of a pause how long the service provider will remain in the "not ready" state, wherein the system is further configured to decide either
- to disconnect the session and change the work state to "not ready", and after expiration of the time duration automatically reconnect to the telephone of the service provider and set the work state to "ready", or
- to maintain the session and change the work state to "not ready", and after expiration of the time duration automatically set the work state to "ready".

The decision to either disconnect the session or to maintain and pause the session may be made by selecting the option that with respect to the time duration of the pause will minimize the total computing resources required at the telecommunication system to put the pause into effect. For example, maintaining a session may consume more computing resources than reestablishment of a new session only in case the pause is longer than 15 minutes. In this case the system will decide to disconnect the session in case the time duration is above 15 minutes.

It has to be noted that the pause command may either be provided by the service provider during his session or it may be automatically provided to the system by an integrated automatism that enforces pauses of a predefined time duration in predefined time intervals.

In accordance with an embodiment of the invention, the pause command is indicated in the voice message.

In accordance with an embodiment of the invention, the campaign management module is further configured to determine a dialing algorithm for placing a call of the set of sequential calls.

For example, the determination of the dialing algorithm comprises determining the dialing algorithm that minimizes the network delay for the communication between the telephone of the service provider and the telephone of the called recipient, wherein the dialing algorithm is adapted for considering the communication technology employed for transmitting the call between the service provider and the telecommunication system and/or for transmitting the call between the recipient and the telecommunication system.

The communication technology may comprise a VOIP technology and/or a mobile communication technology and/or a Public Switched Telephone Network, PSTN, technology.

For example, in case the session between the telecommunication system and the telephone of the service provider is established via a mobile communication technology over the air, the communication delay between the service provider and the system will be larger than in case of a PSTN type communication session. Thus, in case of an over the air connection, the dialing algorithm may avoid placing any calls to recipients using a further mobile communication technology and dial only telephone numbers assigned to a PSTN technology. As a consequence, the telecommunication quality between the service provider and the recipient may be improved.

In accordance with an embodiment of the invention, the determination of the dialing algorithm comprises determining a set of the recipients of the plurality of recipients for simultaneously initializing respective telephone communications from the telecommunication system to each recipient of the set recipients, wherein the campaign management module is further configured to perform the establishment of the telephone communication between the service provider and the recipient to which first of all the telephone communication is successfully initialized, wherein the determining of the set of the recipients is performed by selecting a quantity of recipients of the plurality of recipients, wherein a determination of said quantity comprises determining an average ratio of unsuccessfully initialized telephone communications from the telecommunication system to recipients from a history log of the telecommunication system, wherein the quantity is given by the inverse of the ratio multiplied with a predefined factor.

This may have the advantage that the total time duration during which the session has to be established between the service provider and the telecommunication system is minimized. As direct consequence, this also minimizes the computing resources at the system since computing resource consumption and maintaining of the session are directly related to each other.

This embodiment is based on the insight that for example it may occur that only 1/5 of ail initialized calls placed to recipients will be answered. Thus, the embodiment permits that the system dials out e.g. 400 calls although there are only 100 service providers available. It is optimal to not unnecessarily maintain unused telecommunication sessions to service providers and thus the system may place calls to recipients opportunistically and tries to optimize the service provider session allocation. Therefore service providers don't need to wait long to get calls. Further, the service provider is preferably only engaged with the real recipients while not hearing any call proceeding tones or network messages. Preferably, a telephone communication between the service provider and the recipient will not be established before a voice of the recipient is received at the telecommunication system.

In this predictive dialing mode the algorithm learns the typical handling time and answering rate during the campaign execution. For example, the determination of said quantity comprises determining an average time duration of successfully established telephone communications from the telecommunication system to recipients from the history log of the telecommunication system, wherein the factor is depending on said average time duration. Thus, even during a still ongoing and established telephone communication and the recipient, the algorithm may determine that typically the telephone communication will be terminated by either the service provider or the recipient within a typical time interval, for example 2 minutes. The algorithm may then start to place the next call to a next recipient a few seconds (for example a calculated time period) before the telephone communication is expected to be terminated. In case the service provider currently involved in the telephone communication is not ready at the moment when the system has successfully contacted a subsequent recipient, the dialing algorithm may then assign this subsequent recipient to any other service provider that is currently ready during his session to have an established communication with said subsequent recipient.

In total, for establishing a total number of N recipients by M service providers, the total amount of resources used at the system is minimized.

Thus, for example the service provider is a service provider of a multitude of service providers, wherein the session management module configured to establish a multitude of the telephone communication sessions with the multitude of the service providers via respective telephones of the service providers, wherein the campaign management module is further configured to select the service provider in case the service provider is currently not in an actively established telephone communication with a recipient.

In accordance with an embodiment of the invention, the system further comprises a hub management module configured to establish said calls between the recipients and the service provider during said portion of the session using an internal joining mechanism of the telecommunication system for joining the telephone communication of the service provider with the telecommunication system and the telephone communication of the recipient with the telecommunication system. This may have the advantage that the communication quality is maintained at a high level. No external resources like from an external telephone switching centre are required and instead a high quality telephone conferencing capability of the system may be used instead. Further, as mentioned above, this may permit the service provider to involve the system at any time in controlling the system by placing respective voice commands to the system. It may be sufficient to maintain a single communication session between the service provider and the telecommunication system. No further communication connections are required in between the system and the service provider, not even after a successful establishment of the telephone connection between the service provider and the recipient.

In accordance with an embodiment of the invention, the session is established by the telecommunication system placing a voice call to the telephone of the service provider.

In another aspect, the invention relates to a computer implemented telecommunication method for establishing a telephone communication between a service provider and a recipient using a telecommunication system, the method comprising:
- establishing by a session management module a telephone communication session with a service provider via a telephone of the service provider;
- assigning the service provider to a campaign that defines tasks to be performed by the service provider during at least a portion of the session, wherein the tasks comprise a set of sequential voice calls to be placed by the telecommunication system to a plurality of recipients via respective telephones of the recipients for establishing respective telephone communications between the service provider and the recipient, wherein each of said calls is established between the recipients and the service provider during said portion of the session,
- maintaining the established session of the service provider between each of the sequential calls.

In another aspect, the invention relates to a computer program product comprising computer executable instructions to perform any of the method steps as described above.

Further described is a telecommunication system comprising:
- a session management module configured to establish a session with a service provider via a telephone of the service provider;
- a service provider management module configured to manage, using one or more processors, a work state of the service provider within a plurality of sequential calls between the service provider and a plurality of recipients, wherein the session of the service provider remains established between each of the sequential calls; and
- a hub management module configured to manage a call hub during a call of the plurality of sequential calls between the service provider and a recipient of the plurality of recipients.

For example the session is established by placing a voice call to the telephone of the service provider.

For example, the system further comprises a campaign management module configured to assign the service provider to a campaign that defines tasks to be performed by the service provider during at least a portion of the session.

For example, the work state of the service provider is "not ready" and the service provider management module is configured to provide audible information pertaining to the campaign to the telephone of the service provider. In a further example, the work state of the service provider is "not ready" and the service provider management module is configured to provide textual information pertaining to the campaign to the telephone of the service provider.

In a further example, the campaign management module is configured to provide a choice of campaigns to the service provider.

In a further example, the campaign management module is further to determine that the assigned campaign is complete and to assign the service provider to a next campaign during the established session.

In a further example, the work state of the service provider is "ready" and the service provider management module is further configured to connect the service provider to the recipient using a call hub.

In a further example, the recipient is identified from the plurality of recipients based on an input provided by the recipient before being connected to the service provider.

In a further example, the work state of the service provider is "preview recipient" and the service provider management module is further configured to provide audible information about the recipient to the telephone of the service provider.

In a further example, the work state of the service provider is "preview recipient" and the service provider management module is further configured to provide textual information about the recipient to the telephone of the service provider.

In a further example, the work state of the service provider is "engaged with recipient" and the hub management module is further configured to provide respective interactive voice response (IVR) instances to the telephone of the service provider and the recipient.

In a further example, the hub management module is further configured to join a supervisor to the call hub.

In a further example, the work state of the service provider is "wrap-up" and the service provider management module is further configured to debrief the service provider about the call with the recipient.

In a further example, the debriefing includes using an IVR instance to audibly question the service provider via the telephone of the service provider.

In a further example, the debriefing includes receiving one or more dual tone multi frequency (DTMF) inputs.

In a further example, the debriefing includes receiving one or more voice inputs via an automated speech recognition (ASR) interface.

In a further example, the service provider management module is further to cause the session of the service provider to persist for the duration of the plurality of sequential calls.

Further described is a method comprising:
establishing a session with a service provider via a telephone of the service provider;
managing, using one or more processors, a work state of the service provider within a plurality of sequential calls between the service provider and a plurality of recipients, wherein the session of the service provider remains established between each of the sequential calls; and
managing a call hub during a call of the plurality of sequential calls between the service provider and a recipient of the plurality of recipients.

Further described is a non-transitory machine-readable medium having instructions embodied thereon, the instructions executable by one or more processors to perform operations comprising:
establishing a session with a service provider via a telephone of the service provider; managing, using one or more processors, a work state of the service provider within a plurality of sequential calls between the service provider and a plurality of recipients, wherein the session of the service provider remains established between each of the sequential calls; and
managing a call hub during a call of the plurality of sequential calls between the service provider and a recipient of the plurality of recipients.

### Brief description of the drawings

Some embodiments are illustrated by way of example and not limitation in the figures of the accompanying drawings in which:
FIG. 1 is a diagram of an example networked environment in which various embodiments may be practiced.
FIG. 2 is a block diagram illustrating a call management engine, according to example embodiment.
FIG. 3 is a flowchart illustrating a method to manage a teleservice service provider assigned to a campaign, according to an example embodiment.
FIG. 4 is a flowchart illustrating a method to join a service provider to a campaign, according to an example embodiment.
FIG. 5 is a diagram illustrating example service provider work states during a session, according to an example embodiment.
FIG. 6 is a diagram illustrating a call hub during a call, according to an example embodiment.
FIG. 7 is a multi-lane flowchart illustrating operations performed during a campaign, according to an example embodiment.
FIG. 8 is a block diagram of machine in the example form of a computer system within which a set instructions, for causing the machine to perform any one or more of the methodologies discussed herein, may be executed.

### Detailed description

In the following description, for purposes of explanation, numerous specific details are set forth in order to provide a thorough understanding of some example embodiments. It will be evident, however, to one skilled in the art that the present invention may be practiced without these specific details.

Teleservice providers stationed at various geographical locations may provide teleservices to recipients over the telephone using a telecommunications network. The systems and methods described herein are technology agnostic as to the technology used by the teleservice service provider. The teleservice service provider may use various combinations of technology, such as a traditional telephone, a voice over Internet protocol (VOIP)-enabled telephone, a mobile telephone, or another device that is capable of transmitting and receiving voice data and touch-tone (e.g., dual-tone multi-frequency signaling (DTMF)) data. The teleservice service provider may or may not have access to a second device, such as a computer.

Using the described systems and methods, the teleservice service provider is able to be joined to a campaign, conduct multiple calls with recipients within the campaign, and report the outcome of the calls without ending the session by, for example, hanging up the telephone. In addition, the session with the teleservice service provider may assure that user does not accidentally receive any other calls during the session. if the calls are made over public telephone network, some embodiments may reduce or avoid the possible call set-up fees since the set-up is performed only once and the teleservice service provider does not dial in for each separate recipient call.

Thus, in an example embodiment, the teleservice service provider's session with the call center persists while the call center (e.g., a teleservice provider or call management engine) manages calls (connecting calls and terminating calls) with recipients. During a particular session, the call center may connect and disconnect a plurality of sequential calls with a plurality of individual recipients. The calls may be connected to the session one by one so that the teleservice service provider may interact with each individual recipient. The session of the teleservice service provider persists after each call with a recipient is terminated. As discussed above, this helps to minimize the computing resource consumption at the telecommunication system used at the teleservice provider or call management engine.

As used herein, a campaign refers to the task assigned to the teleservice service provider. A campaign may be a recipient service to be provided, or the like. A number of teleservice service providers may be assigned to a campaign. The term session is used herein to refer to a connection established, over a communication network, between the teleservice service provider and the teleservice provider. A call, as used herein, refers to a connection established between a recipient and the teleservice provider. During a call, the teleservice service provider may interact directly with the recipient using the systems and methods described herein.

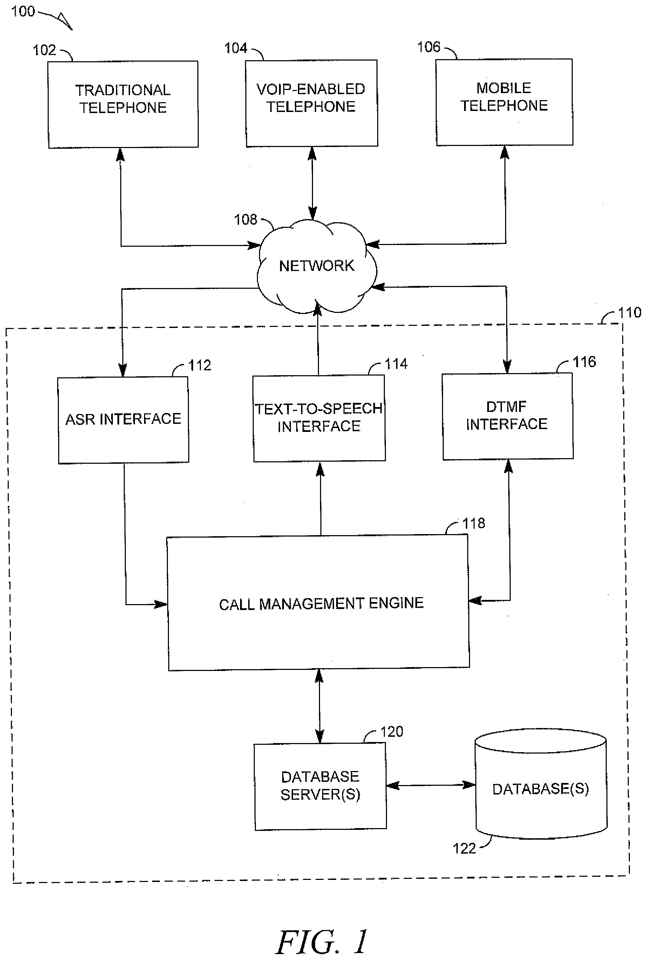

FIG. 1 is a diagram of an example networked environment 100 in which various embodiments may be practiced. The networked environment 100 includes one or more telephones used by teleservice service providers and recipients to access the teleservice provider (telecommunications system) 110 via a communications network 108. The telephones may include traditional telephones 102 operating over a network 108 such as a publicly switched telephone network (PSTN) or a plain old telephone system (POTS) network. The telephones may be VOIP-enabled telephones 104 operating over a network 108 according to the Internet protocol. The telephones may also be mobile telephones 106 operating over a network 108 such as a cellular network or wireless data network. Examples of cellular network technologies include, but are not limited to, Global System for Mobile Communications (GSM), General Packet Radio Service (GPRS), Code Division Multiple Access (CDMA), Evolution-Data Optimized (EV-DO), Enhanced Data Rates for GSM Evolution (EDGE), 3GSM, Digital Enhanced Cordless Telecommunications (DECT), Digital AMPS (IS-136(1'DMA), and Integrated Digital Enhanced Network (iDEN). Additional telephone systems, such as satellite telephone systems, may be used by teleservice service providers or by recipients to access the teleservice provider 110. Other voice-enabled technologies, such as ham radio, may also be used to access the teleservice provider 110.

The teleservice provider 110 facilitates communications between the teleservice service providers and the recipients. The teleservice provider 110 includes one or more interfaces that translate and communicate data between the telephones and a call management engine 118. The interfaces may include, for example, an automatic speech recognition (ASR) interface 112, a text-to-speech interface 114 (e.g., an IVR interface), and a DTMF interface 116. The ASR interface 1 I 2 and the DTMF interface 116 may include various gateways (such as PSTN, IP, or cellular gateways) to access the network 108. In some instances, the DTMF interface 116 may be used to initiate calls or sessions with the telephones by providing a telephone number of a targeted telephone.

The call management engine 118 manages the teleservices provided to the recipients and the teleservice service providers. The call management engine 118 may use various conference calling technologies to manage the sessions of the teleservice service providers and the calls of the recipients. In some instances, the call management engine 118 may implement an IP Multimedia Subsystem (IMS) to manage connections with the teleservice service providers and the recipients. The call management engine 118 is, in turn, shown to be coupled to one or more databases servers 120 that facilitate access to one or more databases 122. Further, while the environment 100 shown in FIG. I employs a client-server architecture, the present invention is of course not limited to such an architecture, and could equally well find application in a distributed, or peer-to-peer, architecture system, for example.

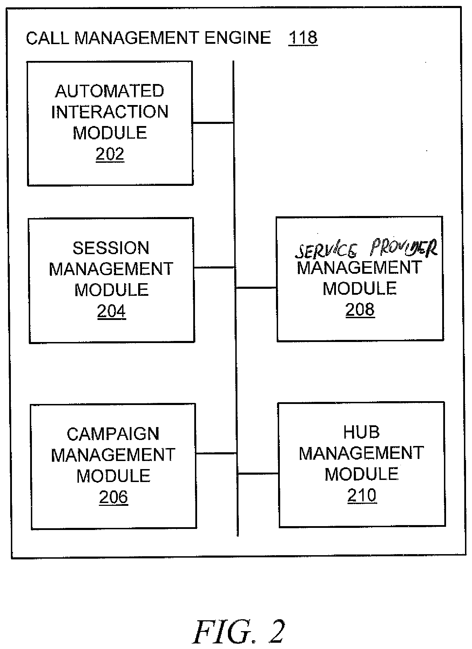

FIG. 2 is a block diagram illustrating a call management engine 118, according to example embodiment. The call management engine 118 may include one or more hardware-implemented modules or software modules.

An automated interaction module 202 is configured to manage electronic communications between the remaining modules of the call management engine 118 and the ASR interface 112 and the DTMF interface 116. The automated interaction module 202 may receive voice or DTMF commands or responses from a telephone and translate the voice commands into machine-readable commands or responses that can be processed by one or more of the remaining modules. Similarly, the automated interaction module 202 may receive machine-readable commands or responses from the remaining modules and translate them into voice or DTMF commands or responses. The automated interaction module 202 may provide, in connection with the other modules, interactive voice response (IVR) functionality using the text-to-speech interface 114. IVR is used by teleservice providers to audibly prompt the user (e.g., a recipient or teleservice service provider) for certain information to, for example, identify the user, route the user, receive selections from the user, or perform other tasks.

A session management module 204 manages sessions between the teleservice service provider and the teleservice provider 110. The session management module 204 may initiate a session with the teleservice service provider by dialing the telephone of the teleservice service provider. In instances where the establishment of the session with the teleservice service provider fails (e.g., if the teleservice service provider's line is busy or the teleservice service provider fails to answer the telephone), the session management module 204 is configured to re-initiate the session (e.g., re-dial the telephone number of the teleservice service provider) at a pre-defined interval for a pre-defined number of times or over a pre-defined interval. To illustrate, the session management module 204 may re-initiate the session every 2 minutes ten times or every 2 minutes over a 20-minute period.

In other embodiments, the session management module 204 may receive a session initiation (e.g., from the telephone of the teleservice service provider). The session management module 204 may identify the teleservice service provider using, for example, caller identification, a teleservice service provider identifier received via the DTMF interface 116, or voice commands received via the ASR interface 112. The session management module 204 may use IVR to request voice or DTMF data from the teleservice service provider in order to identify the teleservice service provider.

The session management module 204 may terminate a session established with a teleservice service provider. The session may be terminated when the teleservice service provider's shift is finished (e.g., after a predefined period or a predefined number of calls).

A campaign management module 206 is configured to manage participants in a campaign. The participants include teleservice service providers and recipients. A teleservice service provider is assigned to one or more campaigns within a session. The campaign management module 206 removes the teleservice service provider from a first campaign and adds the teleservice service provider to a second campaign.

In the campaign management module 206, each recipient call is handled as an individual phone call. The campaign management module 206 may use internal join and un-join operations for connecting recipient call to service provider session. This functionality can be achieved, e.g., with conferencing technology so that teleservice service provider and the recipient are included in the conference as conference participants. Recipient calls may be accepted one at the time into the conference with the teleservice service provider remaining in the conference between calls. This approach may allow more efficient joining operations inside the server infrastructure with less resource consumption instead of end-to-end call set up or end-to-end call transfer mechanisms. In addition, the teleservice service provider may be able to route the recipient to a voice menu that uses IVR or other automated service to receive an automatic announcement, to participate in a survey, or to perform another operation within the campaign or in another campaign.

In embodiments where the calls to the recipients are initiated by the teleservice provider 110, the service provider session status is derived from active calls. Thus the service provider pool status is updated based on call status so that a service provider pool capacity (e.g., a number of service providers in the campaign that are in an inactive call) is incremented when a call is connected and the pool capacity is decremented if the call is disconnected. This method may be used to improve an outbound dialing algorithm based on attributes like the size of the pool, average call duration, and success probability of the recipient call. In some instances, efficiency can be further improved by using live recipient call detection (e.g., via the ASR interface 112). As an intermediate result, the call waiting time for the teleservice service provider may be decreased and the recipient may experience a shortened delay in the service provider response time. In the end, the total time required to handle all outgoing calls to the recipients is minimized. Thus, the total amount of resources required to handle all the calls is minimized.

To implement a campaign, the campaign management module 206 assigns recipient contacts into calling lists. Calling lists are managed inside the campaign. The campaign, or a description of the campaign, includes definitions of rules for starting and ending the campaign. The campaign, or the description of the campaign, may contain other attributes such as dialing mode and transcripts. The campaign, or the description of the campaign, may further identify the service provider group (or service provider calling list) assigned to the campaign.

The campaign management module 206 manages a list of defined campaigns and initiates the respective campaigns based on campaign rules. A campaign begins by dialing to selected teleservice service providers to establish the session with the teleservice service providers. When a threshold number of sessions with teleservice service providers are established, the campaign management module 206 may start to initiate calls to recipients. As soon as the call is connected to the recipient, the call may be joined into a service provider session. When the call and the session are joined, the service provider and the recipient are able to interact.

A service provider management module 308 manages service provider work states within a call with the recipient. The service provider work states define that task to be completed by the service provider at a particular time based on the status of the call with the recipient. Example work states may include, for example, "service provider not ready", "service provider ready", "preview", "engaged with recipient", and "wrap up".

An "service provider not ready" state initially occurs as soon as the service provider has accepted the session and the system connects the service provider into the IVR service. In this state, the service provider has access to personal settings and campaign data provided via the ASR interface 112 to provide, for example, the option to review the transcript of the particular campaign. Optionally, the teleservice provider may send transcripts to the service provider using SMS, mobile push, or other similar service. The service provider may schedule a break from the service, e.g., the service provider will drop out from the session for a lunch period by selecting lunch break option. System shall invite service provider into the service after the break ends (re-call function in session establishment). Breaks may be enforced by administrator and that way system may have inbuilt workforce and shift planning capabilities and automation.

An "service provider ready" state occurs when a service provider indicates that he is ready to take calls from recipients. During this state, the call management engine 118 starts to connect live recipient calls to the service provider.

A "preview" state allows the service provider to preview recipient data before being connected to a call. The call management engine 118 may place a call to the recipient after the preview state is ended. In some instances, the service provider may be connected to the recipient call without any preview state.

An "engaged with recipient" state occurs when the service provider is connected to the call with the recipient. Since the service provider is handling multiple recipient interactions within the same call, the service provider is notified about the state transitions. For example, the recipient name may be announced to the service provider and the connection to the call is indicated using sound effects. The service provider might toggle the recipient in mute state or utilize another function (initiated by, e.g., a DTMF input or ASR input) during the recipient interaction while still able to hear recipient talking.

A "wrap up" state occurs after the call with the recipient is disconnected from the service provider either because the call is ended or because the recipient call is allocated to another service provider within the teleservice. In the "wrap up" state, the service provider may be provided a voice menu for selecting the end results of the disconnected call. The voice menu content (script) may be specified in campaign settings.

A hub management module 210 is configured to manage the call between the service provider and the recipient. The hub management module 210 manages the conference hub, ASR or IVR capabilities, and allows a manager or other third party to join the call.

The service provider and recipient can interact with one another once the recipient call and the service provider calls are connected into a conversation hub. A conversation hub is a temporary context that is created when service provider and recipient are joined. The hub is removed after recipient call ends. The service provider can command the hub using an IVR instance reserved for service provider that receives commands from service provider. The recipient has access to a separate IVR instance that may automatically monitor the recipient's speech to recognize network originated messages or other automated messages. The recipient may also receive voice dialogs that are launched by the service provider (from the service provider's IVR instance). Thus the recipient IVR instance and the service provider IVR instance may work in conjunction using the conversation hub as a routing point. The conversation hub may also contain conference type of function which is facilitated by a media mixer resource reserved for the hub. For example, a conferencing function may be used if there is a need to connect a supervisor participant into the conversation hub.

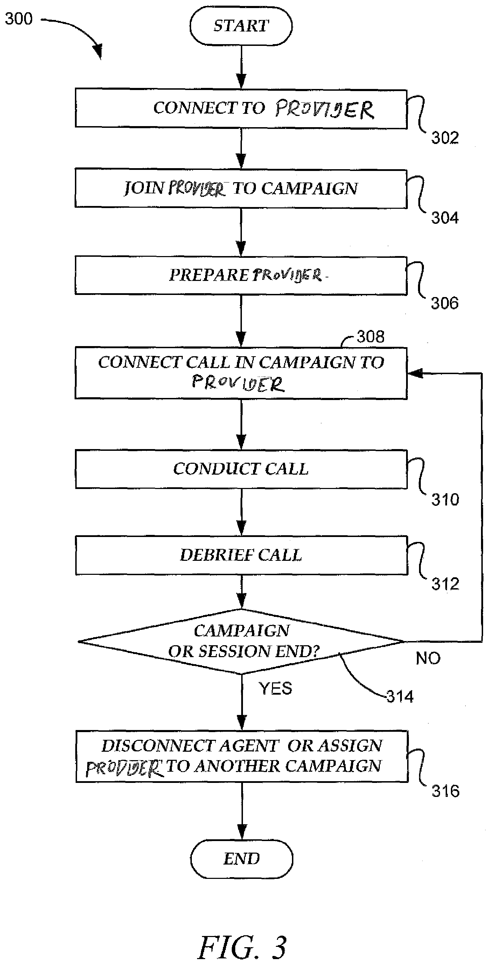

FIG. 3 is a flowchart illustrating a method 300 to manage a teleservice service provider assigned to a campaign, according to an example embodiment. The method 300 may performed, for example, by the call management engine 118.

In an operation 302, a connection between the teleservice service provider and the call management engine 118 is established. The connection is referred to as a "session" between the service provider and the call management engine 118. The connection may be performed by the call management engine 118 by placing a voice call to the service provider and the service provider accepting the voice call.

In an operation 304, the service provider in the session is joined to a campaign. The campaign defines the tasks to be performed by the service provider while the service provider is taking calls with recipients. If the service provider's session outlasts the duration of a campaign, the service provider may be later assigned to second campaign (not shown).

In an operation 306, the service provider is prepared to join the call. The preparation may include a description of the campaign, a script for the service provider to follow, or some other information about the campaign.

In an operation 308, the prepared service provider is connected to a call with a recipient who is part of the campaign. The campaign may include calls made to recipients or calls made by recipients to the teleservice. The recipient may be joined to the campaign based on a telephone number dialed by the recipient, answers to a series of questions asked to the user before being connected to a service provider via, for example, IVR. DTMF, and/or ASR interfaces. The call may be connected to the service provider's session using, for example, teleconferencing techniques.

In an operation 310, the service provider and the recipient conduct the call. The call may include the service provider and the recipient speaking directly, the service provider managing an IVR system where the recipient's input is received via a DTMF or ASR interface, or some combination thereof.

In an operation 312, after the call between the recipient and the service provider is completed, the service provider debriefs the call using voice (ASR) commands or DTMF commands. The debriefing may include reporting an outcome of the call, such as a sales order, or reporting next steps to take with the recipient, e.g, schedule a service visit.

In an operation 314, a determination is made as to whether the campaign or the session is ended. If the campaign has not ended, the service provider is connected to another call in the campaign (operation 308). If the campaign is over, in an operation 316, the session with the service provider is disconnected (e.g., the service provider's work shift is over) or the service provider is assigned to a different campaign.

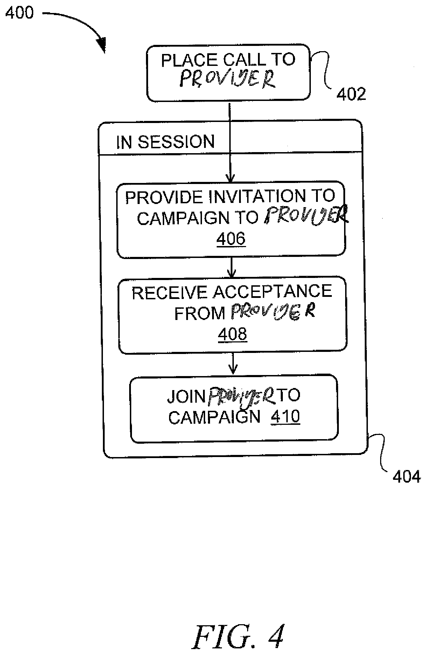

FIG. 4 is a flowchart illustrating a method 400 to join a service provider to a campaign, according to an example embodiment. The method 400 may be performed, for example, by the session management module 204 or the campaign management module 206.

In an operation 402, a voice call or communication is placed by the call management engine 118 to the telephone (e.g., traditional telephone 102, VOIP-enabled telephone 104, or mobile telephone 106) of the service provider to establish a session between the call management engine 118 and the service provider. In some instances, the service provider may initiate the call to the call management engine 118.

During a session 404 between the service provider and the call management engine 118, the campaign management module 206 may invite the service provider to join a particular campaign. In some instances, the service provider may be allowed to choose which campaign to join from a number of available campaigns.

Further during the session 404, in an operation 408, the service provider accepts the campaign to which he is assigned. In an operation 410, the service provider is joined to the campaign.

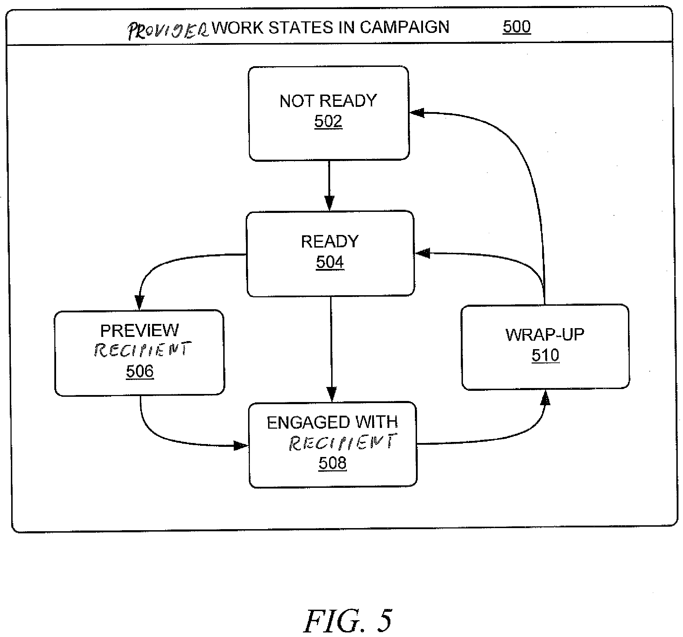

FIG. 5 is a diagram illustrating example service provider work states 500 during a session, according to an example embodiment. The service provider work states may be managed by the service provider management module 208.

In a "not ready" state 502, the service provider may be able to modify personal settings, receive information about the campaign, or disconnect from the session for a scheduled break, for example.

From the "not ready" state, the service provider progresses to a "ready" state 504 where the service provider is available to take calls with recipients. From the "ready" state, the service provider may progress to a "preview recipient" state 506 or an "engaged with recipient" state. If the service provider goes to a "preview recipient" state 506, the service provider proceeds to the "engaged with recipient" state 508 after receiving information about the recipient.

After being engaged with a recipient, the service provider proceeds to a "wrap-up" state 510 where the service provider debriefs from the completed call. After wrapping up, the service provider may return to the "ready" state 504 to take another recipient call or, if the campaign or session is over, the service provider may proceed to the "not ready" state 502.

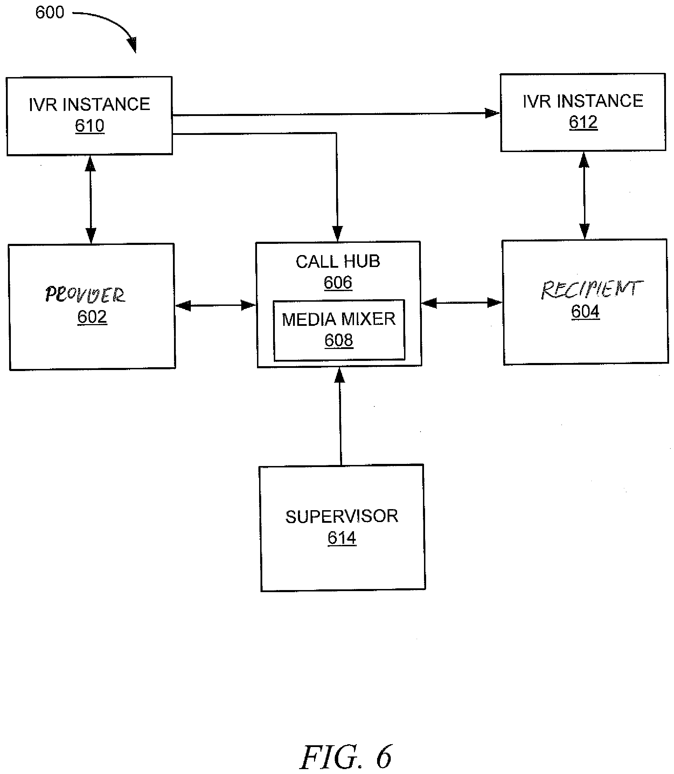

FIG. 6 is a diagram 600 illustrating a call hub 606 during a call, according to an example embodiment. The call hub 606 may be managed by the hub management module 210.

The initial participants who interact within the call hub 606are the service provider 602 (in the "engaged with recipient" state) and the recipient. The call hub 606 may be an instance of a teleconference managed by the call management engine 118. The call hub 606 may include a media mixer 608 that is configured to provide further conferencing function to, for example, join additional participants (e.g., a supervisor 614) to the call hub.

While interacting via the call hub 606, the service provider 602 has access to an IVR instance and/or an ASR instance that can join the meeting as needed or requested. The recipient 604 also has access to a designated IVR instance 612 that can communicate with the recipient during the call.

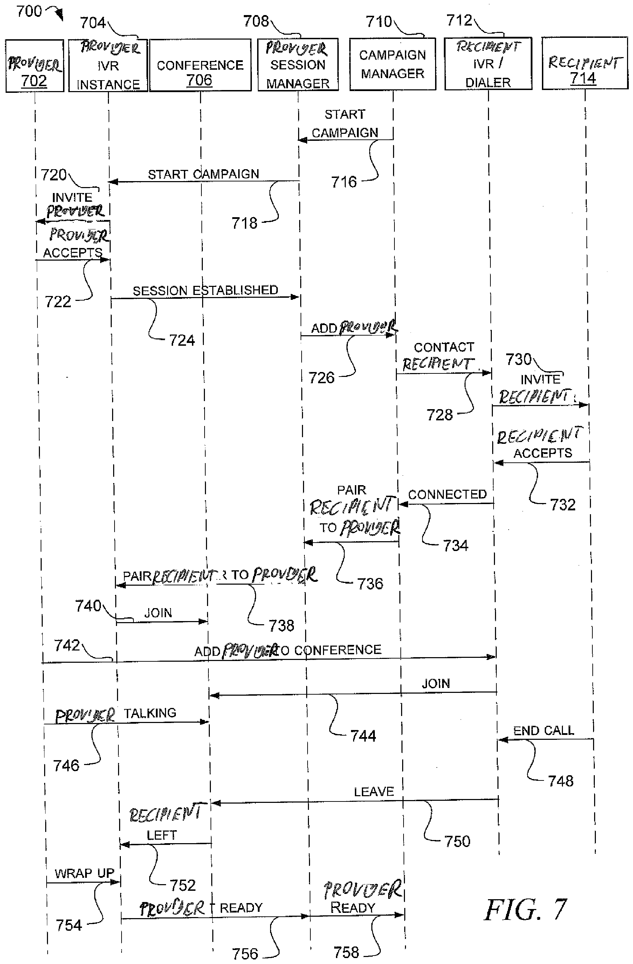

FIG. 7 is a multi-lane flowchart 700 illustrating operations performed during a campaign, according to an example embodiment. In the depicted multi-lane flowchart, the service provider 702 may be, for example, the service provider 602 using a telephone 106. The service provider IVR instance 704 may be the IVR instance 610 provided by the automated interaction module 202 and the text-to-speech interface 114. The conference 706 may be the call hub 606 provided by the hub management module 210. The service provider session manager 708 may be the service provider management module 208 and/or the session management module 204. The campaign manager 710 may be the campaign management module 208. The recipient IVR/dialer 712 may be the IVR instance 610 provided by the automated interaction module 202 and the text-to-speech interface 114. The recipient 714 may be the recipient 604 using a telephone 106. The conference 706, service provider session manager 708, and campaign manager 710 may be provided by the call management engine 118.

At an operation 716, the campaign manager 710 sends a "start campaign" message to the service provider session manager 708. The service provider session manager 708 then relays the message to the service provider IVR instance 704 at operation 718. In turn, at operation 720, the service provider IVR instance 704 invite a service provider 702 to join the campaign. At operation 722, the service provider 702 accepts the invitation.

At operation 724, the service provider IVR instance 704 sends a "sessions established" message to the service provider session manager 708 that, in turn, notifies the campaign manager 710 to add the service provider to the campaign at operation 726. The campaign manager 710, at an operation 728, then requests that the recipient IVR/dialer 712 contact the recipient 714. The recipient IVR/dialer 712 invites the recipient 714 to join the campaign at operation 730. At operation 732, the recipient 714 accepts the invitation.

In an operation 734, the recipient IVR/dialer 712 connects to the campaign manager 710. The campaign manager 710 then pairs the recipient 714 to the service provider 702 in an operation 736 and notifies the service provider session manager 708. The service provider session manager 708 relays the pairing to the service provider IVR instance 704 in an operation 738. The service provider IVR instance 704 joins the conference 706 in an operation 740. In an operation 742, a message is sent to the recipient IVR/dialer 712 indicating that the service provider 702 is added to the conference 706. In response, the recipient IVR/dialer 712 joins the conference 706 in an operation 744.

In an operation 746, the service provider 702 talks within the conference 706. In an operation 748, the recipient 714 ends the call. The recipient IVR/dialer 712 sends a leave message to the conference 706 in an operation 750. The conference 706 sends an indication to the service provider IVR interface 704 that the recipient has left in an operation 752. In an operation 754, the service provider 702 and the service provider INV interface 704 perform wrap-up tasks. In an operation 756, an "service provider ready" indication is sent to the service provider session manager 708 by the service provider IVER interface 704. In an operation 758, the "service provider ready" indication is relayed to the campaign manager 710.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is tangible unit capable of performing certain operations and may be configured or arranged in a certain manner. In example embodiments, one or more computer systems (e.g., a standalone, client or server computer system) or one or more processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or other programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired) or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses) that connect the hardware-implemented modules. In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs).)

### ELECTRONIC APPARATUS AND SYSTEM

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., a field programmable gate array (FPGA) or an application-specific integrated circuit (ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

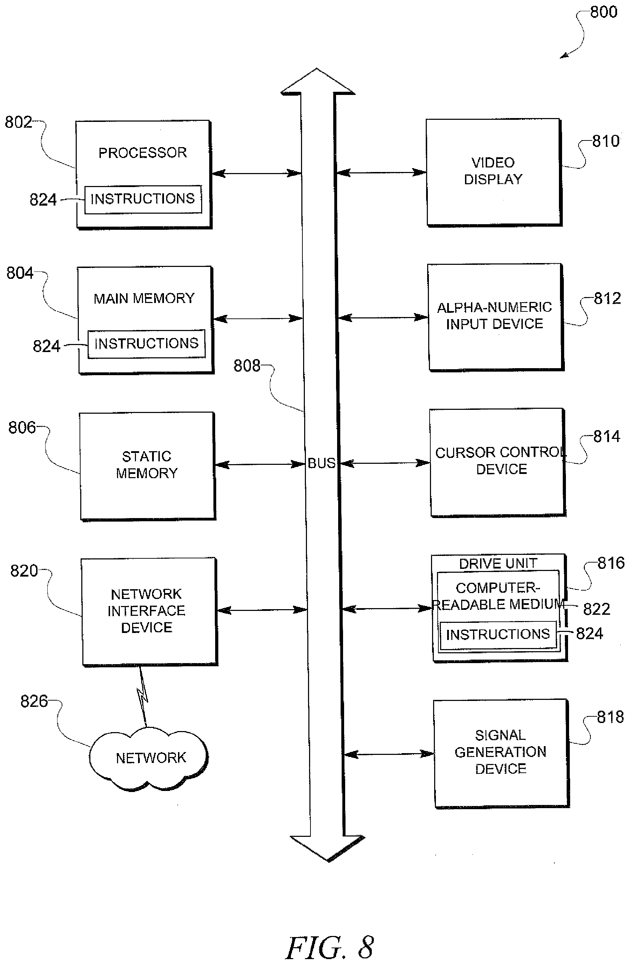

FIG. 8 is a block diagram of machine in the example form of a computer system 800 within which instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processor 802 (e.g., a central processing unit (CPU), a graphics processing unit (CPU) or both), a main memory 804 and a static memory 806, which communicate with each other via a bus 808. The computer system 800 may further include a video display unit 810 (e.g., a liquid crystal display (LCD) or a cathode ray tube (CRT)), The computer system 800 also includes an alphanumeric input device 812 (e.g., a keyboard), a user interface (UI) navigation device 814 (e.g., a mouse), a disk drive unit 816, a signal generation device 818 (e.g., a speaker) and a network interface device 820.

### MACHINE-READABLE MEDIUM

The disk drive unit 816 includes a machine-readable medium 822 on which is stored one or more sets of instructions and data structures (e.g., software) 824 embodying or utilized by any one or more of the methodologies or functions described herein. The instructions 824 may also reside, completely or at least partially, within the main memory 804 and/or within the processor 802 during execution thereof by the computer system 800, the main memory 804 and the processor 802 also constituting machine-readable media.

While the machine-readable medium 822 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding or carrying instructions for execution by the machine and that cause the machine to perform any one or more of the methodologies of the present invention, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include nonvolatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

### TRANSMISSION MEDIUM

The instructions 824 may further be transmitted or received over a communications network 826 using a transmission medium. The instructions 824 may be transmitted using the network interface device 820 and any one of a number of well-known transfer protocols (e.g., HTTP). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of storing, encoding or carrying instructions for execution by the machine, and includes digital or analog communications signals or other intangible media to facilitate communication of such software.

Although an embodiment has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A telecommunication system (110) comprising:
- a session management module (204) configured to establish a telephone communication session with a service provider via a telephone of the service provider;
- a campaign management module (206;710) configured to assign the service provider to a campaign that defines tasks to be performed by the service provider during at least a portion of the session, wherein the tasks comprise a set of sequential voice calls to be placed by the telecommunication system (110) to a plurality of recipients via respective telephones of the recipients for establishing respective telephone communications between the service provider and the recipient, wherein each of said calls is established between the recipients and the service provider during said portion of the session,
wherein the telecommunication system (110) is adapted for maintaining the established session of the service provider between each of the sequential calls,
wherein the campaign management module (206; 710) is further configured to determine a dialing algorithm for placing a call of the set of sequential calls,
wherein the determination of the dialing algorithm comprises determining a set of the recipients of the plurality of recipients for simultaneously initializing respective telephone communications from the telecommunication system (110) to each recipient of the set recipients, wherein the campaign management module (206;710) is further configured to perform an establishment of a telephone communication between the service provider and the recipient to which first of all the telephone communication is successfully initialized, wherein the determining of the set of the recipients is performed by selecting a quantity of recipients of the plurality of recipients, wherein a determination of said quantity comprises determining an average ratio of unsuccessfully initialized telephone communications from the telecommunication system (110) to recipients from a history log of the telecommunication system (110), wherein the quantity is given by the inverse of the ratio multiplied with a predefined factor, wherein the determination of said quantity comprises determining an average time duration of successfully established telephone communications from the telecommunication system (110) to recipients from the history log of the telecommunication system (110), wherein the factor is depending on said average time duration.

2. The telecommunication system (110) according to claim 1, wherein the system further comprises a hub management module (210; 706) configured to manage a call of the plurality of sequential calls between the service provider and the recipient of the plurality of recipients, wherein the telecommunication system (110) further comprises an interactive voice response, IVR, module (610) wherein the IVR module (610) is configured for
- receiving in the session a voice command start signal from the service provider via the telephone of the service provider,
- after receiving the start signal, interpreting a subsequent voice message of the service provider received via the telephone of the service provider as a voice command for controlling the telecommunication system (110),
wherein the telecommunication system (110) is further adapted for executing the voice command, wherein the hub management module (210; 706) is configured for blanking the voice command start signal and the voice message in the call between the service provider and the recipient.

3. The telecommunication system (110) according to claim 2, wherein the voice command start signal is indicated by one or more touch tone signals.

4. The telecommunication system (110) according to any of the preceding claims, further comprising a service provider management module (208) configured to manage, using one or more processors, a work state of the service provider within the plurality of sequential calls between the service provider and the plurality of recipients, wherein
- in case the work state of the service provider is "ready", the service provider management module (208) is further configured to connect the service provider to a recipient of the plurality of recipients using a call placed to said recipient,
- in case the work state of the service provider is "not ready", the service provider management module (208) is further configured to delay connecting the service provider to a recipient of the plurality of recipients using a call placed to said recipient until the work state of the service provider is "ready" or to assign the task of placing the call to the recipient to a further service provider assigned to the campaign.

5. The telecommunication system (110) according to claim 4, wherein the system is further adapted for receiving a pause command for changing the work state of the service provider from "ready" to "not ready", wherein the pause command indicates a time duration of a pause how long the service provider will remain in the "not ready" state, wherein the system is further configured to decide either
- to disconnect the session and change the work state to "not ready", and after expiration of the time duration automatically reconnect to the telephone of the service provider and set the work state to "ready", or
- to maintain the session and change the work state to "not ready", and after expiration of the time duration automatically set the work state to "ready".

6. The telecommunication system (110) according to claim 5, wherein the pause command is indicated in the voice message.

7. The telecommunication system (110) of claim 1, wherein the determination of the dialing algorithm comprises determining the dialing algorithm that minimizes the network delay for the communication between the telephone of the service provider and the telephone of the called recipient, wherein the dialing algorithm is adapted for considering the communication technology employed for transmitting the call between the service provider and the telecommunication system (110) and/or for transmitting the call between the recipient and the telecommunication system (110).

8. The telecommunication system (110) according to claim 7, wherein the communication technology comprises a VOIP technology and/or a mobile communication technology and/or a Public Switched Telephone Network, PSTN, technology.

9. The telecommunication system (110) of claim 1, wherein the service provider is a service provider of a multitude of service providers, wherein the session management module (204) configured to establish a multitude of the telephone communication sessions with the multitude of the service providers via respective telephones of the service providers, wherein the campaign management module (206;710) is further configured to select the service provider in case the service provider is currently not in an actively established telephone communication with a recipient.

10. The telecommunication system (110) according to any of the previous claims, wherein the system further comprises a hub management module (210; 706) configured to establish said calls between the recipients and the service provider during said portion of the session using an internal joining mechanism of the telecommunication system (110) for joining the telephone communication of the service provider with the telecommunication system (110) and the telephone communication of the recipient with the telecommunication system (110).

11. The telecommunication system (110) according to any of the previous claims, wherein the session is established by the telecommunication system (110) placing a voice call to the telephone of the service provider.

12. A computer implemented telecommunication method for establishing a telephone communication between a service provider and a recipient using a telecommunication system (110), the method comprising:
- establishing by a session management module (204) a telephone communication session with a service provider via a telephone of the service provider;
- assigning by a campaign management module (206;710) the service provider to a campaign that defines tasks to be performed by the service provider during at least a portion of the session, wherein the tasks comprise a set of sequential voice calls to be placed by the telecommunication system (110) to a plurality of recipients via respective telephones of the recipients for establishing respective telephone communications between the service provider and the recipient, wherein each of said calls is established between the recipients and the service provider during said portion of the session,
maintaining the established session of the service provider between each of the sequential calls, wherein the campaign management module (206; 710) is further configured to determine a dialing algorithm for placing a call of the set of sequential calls,
- wherein the determination of the dialing algorithm comprises determining a set of the recipients of the plurality of recipients for simultaneously initializing respective telephone communications from the telecommunication system (110) to each recipient of the set recipients, wherein the campaign management module (206;710) is further configured to perform an establishment of a telephone communication between the service provider and the recipient to which first of all the telephone communication is successfully initialized, wherein the determining of the set of the recipients is performed by selecting a quantity of recipients of the plurality of recipients, wherein a determination of said quantity comprises determining an average ratio of unsuccessfully initialized telephone communications from the telecommunication system (110) to recipients from a history log of the telecommunication system (110), wherein the quantity is given by the inverse of the ratio multiplied with a predefined factor.

13. A computer program product comprising computer executable instructions to perform any of the method steps as claimed in claim 12.

## Patentansprüche

1. Telekommunikationssystem (110), umfassend:
- ein Sitzungsverwaltungsmodul (204), das dafür ausgelegt ist, eine Telefonkommunikationssitzung mit einem Dienstanbieter über ein Telefon des Dienstanbieters einzurichten;
- ein Kampagnenverwaltungsmodul (206; 710), das dafür ausgelegt ist, den Dienstanbieter einer Kampagne zuzuordnen, die Aufgaben definiert, die vom Dienstanbieter während zumindest eines Teils der Sitzung durchgeführt werden sollen, wobei die Aufgaben einen Satz aufeinander folgender Sprachanrufe umfassen, die vom Telekommunikationssystem (110) bei mehreren Empfängern jeweils über Telefone der Empfänger getätigt werden sollen, um jeweils Telefonkommunikationen zwischen dem Dienstanbieter und dem Empfänger einzurichten, wobei jeder von den Anrufen zwischen den Empfängern und dem Dienstanbieter während des Teils der Sitzung eingerichtet wird,
wobei das Telekommunikationssystem (110) dafür ausgelegt ist, die eingerichtete Sitzung des Dienstanbieters zwischen jedem der aufeinanderfolgenden Anrufe aufrechtzuerhalten,
wobei das Kampagnenverwaltungsmodul (206, 710) ferner dafür ausgelegt ist, einen Anwählalgorithmus zu bestimmen, um einen Anruf von dem Satz aufeinanderfolgender Anrufe zu tätigen,
wobei die Bestimmung des Anwählalgorithmus das Bestimmen eines Satzes von Empfängern von den mehreren Empfängern umfasst, um entsprechende Telefonkommunikationen vom Telekommunikationssystem (110) zu den einzelnen Empfängern von dem Satz von Empfängern jeweils gleichzeitig zu initialisieren, wobei das Kampagnenverwaltungsmodul (206, 710) ferner dafür ausgelegt ist, eine Einrichtung einer Telefonkommunikation zwischen dem Dienstanbieter und dem Empfänger, mit dem die Telefonkommunikation als allererstes erfolgreich initialisiert wird, durchzuführen, wobei die Bestimmung des Satzes von Empfängern durch Auswählen einer Menge von Empfängern von den mehreren Empfängern durchgeführt wird, wobei eine Bestimmung der Menge das Bestimmen einer durchschnittlichen Verhältniszahl von nicht erfolgreich initialisierten Telefonkommunikationen vom Telekommunikationssystem (110) zu Empfängern aus einem Verlaufsprotokoll des Telekommunikationssystems (110) umfasst, wobei sich die Menge aus dem Kehrwert der Verhältniszahl, multipliziert mit einem vorgegebenen Faktor, ergibt, wobei die Bestimmung der Menge das Bestimmen einer durchschnittlichen zeitlichen Dauer erfolgreich eingerichteter Telefonkommunikationen vom Telekommunikationssystem (110) zu Empfängern aus dem Verlaufsprotokoll des Telekommunikationssystems (110) umfasst, wobei der Faktor von der durchschnittlichen zeitlichen Dauer abhängt.

2. Telekommunikationssystem (110) nach Anspruch 1, wobei das System ferner ein Hub-Verwaltungsmodul (210; 706) umfasst, das dafür ausgelegt ist, einen Anruf von den mehreren aufeinanderfolgenden Anrufen zwischen dem Dienstanbieter und dem Empfänger von den mehreren Empfängern zu verwalten, wobei das Telekommunikationssystem (110) ferner ein interaktives Sprachdialog-, IVR-Modul (610) umfasst, wobei das IVR-Modul (610) dafür ausgelegt ist,
- in der Sitzung vom Dienstanbieter über das Telefon des Dienstanbieters ein Sprachbefehl-Startsignal zu empfangen,
- nach dem Empfang des Startsignals eine folgende Sprachnachricht des Dienstanbieters, die über das Telefon des Dienstanbieters empfangen wird, als Sprachbefehl zum Steuern des Telekommunikationssystems (110) zu interpretieren,
wobei das Telekommunikationssystem (110) ferner dafür ausgelegt ist, den Sprachbefehl auszuführen, wobei das Hub-Verwaltungsmodul (210; 706) dafür ausgelegt ist, das Sprachbefehl-Startsignal und die Sprachmitteilung in dem Anruf zwischen dem Dienstanbieter und dem Empfänger auszutasten.

3. Telekommunikationssystem (110) nach Anspruch 2, wobei das Sprachbefehl-Startsignal von einem oder mehreren Tastenwahlsignalen angegeben wird.

4. Telekommunikationssystem (110) nach einem der vorangehenden Ansprüche, ferner ein Dienstanbieterverwaltungsmodul (208) umfassend, das dafür ausgelegt ist, unter Verwendung eines oder mehrerer Prozessoren einen Arbeitszustand des Dienstanbieters innerhalb der mehreren aufeinanderfolgenden Anrufe zwischen dem Dienstanbieter und den mehreren Empfängern zu verwalten, wobei
das Dienstanbieterverwaltungsmodul (208) ferner dafür ausgelegt ist, in einem Fall, wo der Arbeitszustand des Dienstanbieters "bereit" ist, den Dienstanbieter unter Verwendung eines Anrufs, der bei einem Empfänger von den mehreren Empfängern getätigt wird, mit dem Empfänger zu verbinden,
- das Dienstanbieterverwaltungsmodul (208) ferner dafür ausgelegt ist, in einem Fall, wo der Dienstanbieter "nicht bereit" ist, eine Verbindung des Dienstanbieters mit einem Empfänger von den mehreren Empfängern unter Verwendung eines Anrufs, der beim Empfänger getätigt wird, zu verzögern, bis der Arbeitszustand des Dienstanbieters "bereit" ist, oder die Aufgabe, den Anruf beim Empfänger zu tätigen, einem weiteren Dienstanbieter zuzuweisen, welcher der Kampagne zugewiesen ist.

5. Telekommunikationssystem (110) nach Anspruch 4, wobei das System ferner dafür ausgelegt ist, einen Pausenbefehl zum Ändern des Arbeitszustands des Dienstanbieters von "bereit" in "nicht bereit" zu empfangen, wobei der Pausenbefehl eine Zeitdauer einer Pause angibt, über die der Dienstanbieter im "nicht bereit"-Zustand bleiben wird, wobei das System ferner dafür ausgelegt ist zu entscheiden,
- entweder die Sitzung zu trennen und den Arbeitszustand in "nicht bereit" zu ändern und sich nach Ablauf der Zeitdauer automatisch wieder mit dem Dienstanbieter zu verbinden und den Arbeitszustand auf "bereit" zu setzen, oder
- die Sitzung aufrechtzuerhalten und den Arbeitszustand in "nicht bereit" zu ändern und nach Ablauf der Zeitdauer den Arbeitszustand automatisch auf "bereit" zu setzen.

6. Telekommunikationssystem (110) nach Anspruch 5, wobei der Pausenbefehl in der Sprachnachricht angegeben wird.

7. Telekommunikationssystem (110) nach Anspruch 1, wobei die Bestimmung des Anwählalgorithmus das Bestimmen des Anwählalgorithmus, der die Netzverzögerung für die Kommunikation zwischen dem Telefon des Dienstanbieters und dem Telefon des angerufenen Empfängers minimiert, umfasst, wobei der Anwählalgorithmus dafür ausgelegt ist, die Kommunikationstechnologie, die zum Übertragen des Anfrufs zwischen dem Dienstanbieter und dem Telekommunikationssystem (110) und/oder für die Übertragung des Anrufs zwischen dem Empfänger und dem Telekommunikationssystem (110) verwendet wird, zu berücksichtigen.

8. Telekommunikationssystem (110) nach Anspruch 7, wobei die Kommunikationstechnologie eine VOIP-Technologie und/oder eine Mobilkommunikationstechnologie und/oder eine PSTN-Telefonnetztechnologie umfasst.

9. Telekommunikationssystem (110) nach Anspruch 1, wobei der Dienstanbieter ein Dienstanbieter aus einer Vielzahl von Dienstanbietern ist, wobei das Sitzungsverwaltungsmodul (204) dafür ausgelegt ist, eine Vielzahl von Telekommunikationssitzungen mit der Vielzahl von Dienstanbietern jeweils über Telefone der Dienstanbieter einzurichten, wobei das Kampagnenverwaltungsmodul (206; 710) ferner dafür ausgelegt ist, den Dienstanbieter auszuwählen, falls der Dienstanbieter aktuell nicht in einer aktiv eingerichteten Telefonkommunikation mit einem Empfänger steht.

10. Telekommunikationssystem (110) nach einem der vorangehenden Ansprüche, wobei das System ferner ein Hub-Verwaltungsmodul (210; 706) umfasst, das dafür ausgelegt ist, die Anrufe zwischen den Empfängern und dem Dienstanbieter während des Teils der Sitzung unter Verwendung eines internen Vereinigungsmechanismus des Telekommunikationssystems (110) einzurichten, um die Telefonkommunikation des Dienstanbieters mit dem Telekommunikationssystem (110) und die Telefonkommunikation des Empfängers mit dem Telekommunikationssystem (110) zu vereinen.

11. Telekommunikationssystem (110) nach einem der vorangehenden Ansprüche, wobei die Sitzung von dem Telekommunikationssystem (110) eingerichtet wird, das einen Sprachanruf am Telefon des Dienstanbieters tätigt.

12. Computerimplementiertes Telekommunikationsverfahren zur Einrichtung einer Telefonkommunikation zwischen einem Dienstanbieter und einem Empfänger unter Verwendung eines Telekommunikationssystems (110), wobei das Verfahren umfasst:
- Einrichten einer Telefonkommunikationssitzung mit einem Dienstanbieter über ein Telefon des Dienstanbieters durch ein Sitzungsverwaltungsmodul (204);
- Zuordnen des Dienstanbieters zu einer Kampagne, die Aufgaben definiert, die vom Dienstanbieter während zumindest eines Teils der Sitzung durchgeführt werden sollen, durch ein Kampagnenverwaltungsmodul (206; 710), wobei die Aufgaben einen Satz aufeinanderfolgender Sprachanrufe umfassen, die vom Telekommunikationssystem (110) bei mehreren Empfängern jeweils über Telefone der Empfänger getätigt werden sollen, um jeweils Telefonkommunikationen zwischen dem Dienstanbieter und dem Empfänger einzurichten, wobei jeder von den Anrufen zwischen den Empfängern und dem Dienstanbieter während des Teils der Sitzung eingerichtet wird, Aufrechterhalten der eingerichteten Sitzung des Dienstanbieters zwischen jedem der aufeinanderfolgenden Anrufe, wobei das Kampagnenverwaltungsmodul (206; 710) ferner dafür ausgelegt ist, einen Anwählalgorithmus zum Tätigen eines Anrufs von dem Satz aufeinanderfolgender Anrufe zu bestimmen,
- wobei die Bestimmung des Anwählalgorithmus das Bestimmen eines Satzes von Empfängern von den mehreren Empfängern umfasst, um Telefonkommunikationen vom Telekommunikationssystem (110) zu den einzelnen Empfängern von dem Satz von Empfängern jeweils gleichzeitig zu initialisieren, wobei das Kampagnenverwaltungsmodul (206, 710) ferner dafür ausgelegt ist, eine Einrichtung einer Telefonkommunikation zwischen dem Dienstanbieter und dem Empfänger, mit dem die Telefonkommunikation als allererstes erfolgreich initialisiert wird, durchzuführen, wobei die Bestimmung des Satzes von Empfängern durch Auswählen einer Menge von Empfängern von den mehreren Empfängern durchgeführt wird, wobei eine Bestimmung der Menge das Bestimmen einer durchschnittlichen Verhältniszahl von nicht erfolgreich initialisierten Telefonkommunikationen vom Telekommunikationssystem (110) zu Empfängern aus einem Verlaufsprotokoll des Telekommunikationssystems (110) umfasst, wobei sich die Menge aus dem Kehrwert der Verhältniszahl, multipliziert mit einem vorgegebenen Faktor, ergibt.

13. Computerprogrammprodukt, das computerausführbare Befehle zur Durchführung eines der in Anspruch 12 beanspruchten Verfahrensschritte umfasst.

## Revendications

1. Système de télécommunication (110) comprenant :
- un module de gestion de session (204) configuré pour établir une session de communication par téléphone avec un fournisseur de services par l'intermédiaire d'un téléphone du fournisseur de services ;
- un module de gestion de campagne (206; 710) configuré pour associer le fournisseur de services à une campagne qui définit des tâches devant être réalisées par le fournisseur de services durant au moins une partie de la session, où les tâches comprennent un ensemble d'appels vocaux séquentiels devant être placés par le système de communication (110) vers une pluralité de bénéficiaires par l'intermédiaire de téléphones respectifs des bénéficiaires pour l'établissement de communications téléphoniques respectives entre le fournisseur de services et le bénéficiaire, où chacun desdits appels est établi entre les bénéficiaires et le fournisseur de services durant ladite partie de la session,
où le système de télécommunication (110) est approprié pour maintenir la session établie du fournisseur de service entre chacun des appels séquentiels,
où le module de gestion de campagne (206; 710) est en outre configuré pour déterminer un algorithme de numérotation pour placer un appel de l'ensemble des appels séquentiels,
où la détermination de l'algorithme de numérotation comprend la détermination d'un ensemble de bénéficiaires parmi la pluralité des bénéficiaires pour initialiser simultanément des communications téléphoniques respectives à partir du système de télécommunication (110) vers chaque bénéficiaire de l'ensemble des bénéficiaires, où le module de gestion de campagne (206; 710) est en outre configuré pour effectuer l'établissement d'une communication téléphonique entre le fournisseur de services et le bénéficiaire pour lequel la communication téléphonique a été initialisée avec succès en premier, où la détermination de l'ensemble des bénéficiaires est réalisée en choisissant une quantité de bénéficiaires parmi la pluralité des bénéficiaires, où une détermination de ladite quantité comprend une détermination d'un rapport moyen de communications téléphoniques non initialisées avec succès à partir du système de télécommunication (110) vers des bénéficiaires à partir d'un journal de l'historique du système de télécommunication (110), où la quantité est donnée par l'inverse du rapport multiplié par un facteur prédéfini, où la détermination de ladite quantité comprend la détermination d'une durée moyenne de communications téléphoniques établies avec succès à partir du système de télécommunication (110) vers des bénéficiaires à partir du journal de l'historiques du système de télécommunication (110), où le facteur dépend de ladite durée moyenne.

2. Système de télécommunication (110) selon la revendication 1, dans lequel le système comprend en outre un module de gestion de plateforme (210 ; 706) configuré pour gérer un appel parmi la pluralité des appels séquentiels entre le fournisseur de service et le bénéficiaire parmi la pluralité des bénéficiaires, où le système de télécommunication (110) comprend en outre un module de réponse vocale interactive (IVR) (610), où le module IVR (610) est configuré pour
- recevoir dans la session un signal de départ par commande vocale à partir du fournisseur de services par l'intermédiaire du téléphone du fournisseur de service,
- après la réception du signal de départ, interpréter un message vocal ultérieur du fournisseur de services reçu par l'intermédiaire du téléphone du fournisseur de services sous la forme d'une commande vocale pour commander le système de télécommunication (110),
où le système de télécommunication (110) est en outre approprié pour l'exécution de la commande vocale, où le module de gestion de plateforme (210 ; 706) est configuré pour la suppression du signal de départ par commande vocale et du message vocal dans l'appel entre le fournisseur de services et le bénéficiaire.

3. Système de télécommunication (110) selon la revendication 2, dans lequel le signal de départ par commande vocale est indiqué par un ou plusieurs signaux de tonalité.

4. Système de télécommunication (110) selon l'une quelconque des revendications précédentes, comprenant en outre un module de gestion de fournisseur de services (208) configuré pour gérer, en utilisant un ou plusieurs processeurs, un état de fonctionnement du fournisseur de services dans la pluralité des appels séquentiels entre le fournisseur de services et la pluralité de bénéficiaires, où
- dans le cas où l'état de fonctionnement du fournisseur de services est « prêt », le module de gestion de fournisseur de services (208) est en outre configuré pour connecter le fournisseur de services à un bénéficiaire parmi la pluralité des bénéficiaires en utilisant un appel prévu pour ledit bénéficiaire,
- dans le cas où l'état de fonctionnement du fournisseur de services est « pas prêt », le module de gestion de fournisseur de services (208) est en outre configuré pour différer la connexion du fournisseur de services à un bénéficiaire parmi la pluralité des bénéficiaires en utilisant un appel prévu pour ledit bénéficiaire jusqu'à ce que l'état de fonctionnement du fournisseur de services est « prêt » ou pour attribuer la tâche de placement de l'appel au bénéficiaire à un autre fournisseur de services associé à la campagne.

5. Système de télécommunication (110) selon la revendication 4, où le système est en outre approprié pour recevoir une commande de pause pour changer l'état de fonctionnement du fournisseur de services de « prêt » à « pas prêt », où la commande de pause indique une durée d'une pause pendant laquelle le fournisseur de services restera dans l'état « pas prêt », où le système est en outre configuré pour décider
- soit de déconnecter la session et de changer l'état de fonctionnement sur « pas prêt », et après l'expiration de la durée, reconnecter automatiquement au téléphone du fournisseur de services et mettre l'état de fonctionnement sur « prêt »,
- soit maintenir la session et changer l'état de fonctionnement sur « prêt », et après l'expiration de la durée, placer automatiquement l'état de fonctionnement sur « prêt ».

6. Système de télécommunication (110) selon la revendication 5, dans lequel la commande de pause est indiquée par un message vocal.

7. Système de télécommunication (110) selon la revendication 1, dans lequel la détermination de l'algorithme de numération comprend la détermination de l'algorithme de numération qui minimise le retard de réseau pour la communication entre le téléphone du fournisseur de services et le téléphone du bénéficiaire appelé, où l'algorithme de numération est approprié pour prendre en considération la technologie de communication employée pour la transmission de l'appel entre le fournisseur de services et le système de télécommunication (110) et/ou pour la transmission de l'appel entre le bénéficiaire et le système de télécommunication (110).

8. Système de télécommunication (110) selon la revendication 7, où la technologie de communication comprend une technologie voix sur réseau IP (VOIP) et/ou une technologie de communication mobile, et/ou une technologie de réseau téléphonique public commuté, PSTN.

9. Système de télécommunication (110) selon la revendication 1, où le fournisseur de services est un fournisseur de services parmi une multitude de fournisseurs de services, où le module de gestion de session (204) est configuré pour établir une multitude de sessions de communications téléphoniques avec la multitude de fournisseurs de services par l'intermédiaire des téléphones respectifs des fournisseurs de services, où le module de gestion de campagne (206; 710) est en outre configuré pour choisir le fournisseur de services dans le cas où le fournisseur de services n'est à l'instant pas dans une communication téléphonique établie activement avec un bénéficiaire.

10. Système de télécommunication (110) selon l'une quelconque des revendications précédentes, où le système comprend en outre un module de gestion de plateforme (210 ; 706) configuré pour établir lesdits appels entre les bénéficiaires et le fournisseur de services pendant ladite partie de la session en utilisant un mécanisme de jonction interne du système de télécommunication (110) pour joindre la communication téléphonique du fournisseur de services avec le système de télécommunication (110) et la communication téléphonique du bénéficiaire avec le système de télécommunication (110).

11. Système de télécommunication (110) selon l'une quelconque des revendications précédentes, où la session est établie par le système de télécommunication (110) en plaçant un appel vocal sur le téléphone du fournisseur de services.

12. Procédé de télécommunication mis en oeuvre par ordinateur pour établir une communication téléphonique entre un fournisseur de services et un bénéficiaire en utilisant un système de télécommunication (110), le procédé comprenant :
- l'établissement, par un module de gestion de session (204), d'une communication téléphonique avec un fournisseur de services par l'intermédiaire d'un téléphone du fournisseur de services ;
- l'association, par un module de gestion de campagne (206 ; 710), du fournisseur de services à une campagne qui définit des tâches devant être réalisées par le fournisseur de services durant au moins une partie de la session, où les tâches comprennent un ensemble d'appels vocaux séquentiels devant être placés par le système de télécommunication (110) vers une pluralité de bénéficiaires par l'intermédiaire des téléphones respectifs des bénéficiaires pour établir des communications téléphoniques respectives entre le fournisseur de services et le bénéficiaire, où chacun desdits appels est établi entre les bénéficiaires et le fournisseur de services durant ladite partie de la session,
le maintien de la session établie du fournisseur de services entre chacun des appels séquentiels, où le module de gestion de campagne (206 ; 710) est en outre configuré pour déterminer un algorithme de numération pour placer un appel de l'ensemble des appels séquentiels,
- où la détermination de l'algorithme de numération comprend la détermination d'un ensemble de bénéficiaires parmi la pluralité des bénéficiaires pour des communications téléphoniques respectives s'initialisant simultanément à partir du système de télécommunication (110) vers chaque bénéficiaire de l'ensemble des bénéficiaires, où le module de gestion de campagne (206; 710) est en outre configuré pour effectuer l'établissement d'une communication téléphonique entre le fournisseur de services et le bénéficiaire pour lequel la première de toutes les communications téléphoniques est initialisée avec succès, où la détermination de l'ensemble des bénéficiaires est réalisée en choisissant une quantité de bénéficiaires parmi la pluralité des bénéficiaires, où une détermination de ladite quantité comprend une détermination d'un rapport moyen de communications téléphoniques initialisées avec succès à partir du système de télécommunication (110) vers des bénéficiaires provenant d'un journal d'historique du système de télécommunication (110), où la quantité est donnée par l'inverse du rapport multiplié par un facteur prédéfini.

13. Produit de programme informatique comprenant des instructions exécutables par ordinateur pour réaliser l'une quelconque des étapes de procédé selon la revendication 12.
